# EUROPEAN PATENT APPLICATION

(11) **EP 1 691 465 A2**
(43) Date of publication of application: **16.08.2006**
(21) Application number: 06008454.8
(22) Date of filing: 08.02.1999
(51) Int. Cl.: H02J 7/14, H05B 39/08

(54) **Lamp lighting and battery charging system for a vehicle**

(30) Priority: 12.02.1998 JP 2961098; 05.03.1998 JP 5327398
(62) Divisional of application: 99300897.8
(71) Applicant: Mitsuba Corporation, Kiryu-shi, Gunma-ken (JP)
(72) Inventor: The designation of the inventor has not yet been filed
(74) Representative: Rees, Alexander Ellison

(57) **Abstract**

Provided is a lamp lighting and battery charging system for a vehicle which can favorably use the electric power produced from the engine-driven electric generator in both lamp lighting and battery charging. According to an embodiment of the present invention, the turning on of the switching device for controlling the electric current of the lamp is gradually delayed so that the time duration of the electric current flowing through the lamp is gradually decreased as the engine speed increases, preventing an excessive electric current from damaging the lamp in the high engine speed range.

## Description

### TECHNICAL FIELD

The present invention relates to a lamp lighting and battery charging control system for a vehicle in which an AC voltage from an electric generator which is driven by an internal combustion engine is used to light a lamp as well as 10 charge a battery.

### BACKGROUND OF THE INVENTION

Conventionally in some of the vehicles such as motorcycles, a voltage having an AC waveform is produced from an electric generator which is driven by an internal combustion engine, and the AC voltage from the generator is used to charge a battery as well as to light a lamp such as a headlamp.

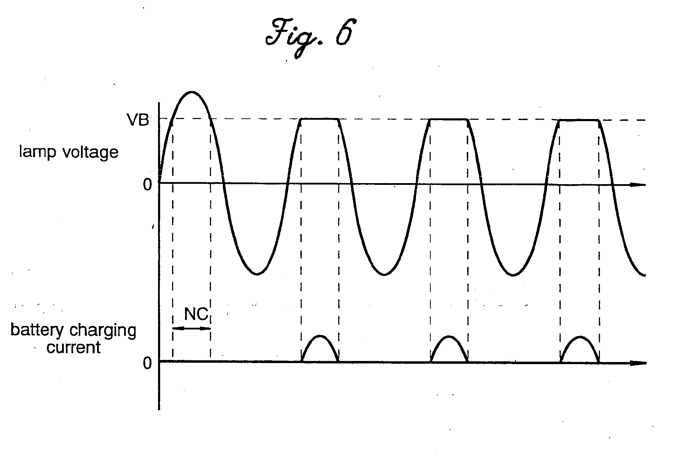

According to one conventional technique to use the AC voltage from the generator in the battery charging and lamp lighting, the full-wave of the AC voltage from the generator is used in lighting the lamp in which when the battery requires charging, only a voltage higher than a prescribed voltage VB is used in charging the battery, as shown in Figure 6. This technique is called a "full-wave" technique. In Figure 6, a period in which the voltage is greater than VB but no charging is required by the battery is indicated by NC. In a system employing the full-wave technique, the battery charging electric current is relatively small and tends to be insufficient for adequately charging the battery when the engine speed is low and hence the AC voltage from the electric generator is small.

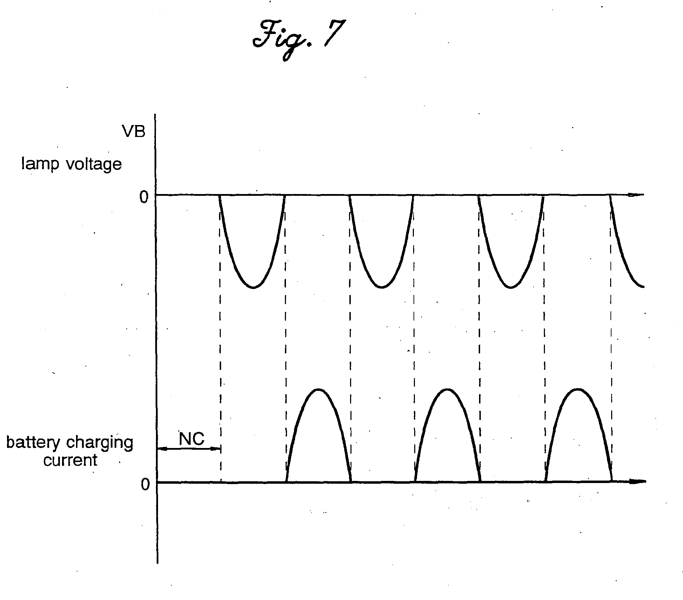

Another conventional technique is known as "half-wave technique, in which negative half-waves of the AC voltage are used in lighting the lamp while positive half-waves are used in charging the battery, as shown in Figure 7. In a system employing the half-wave technique, the battery charging current can be relatively large, but the negative half-waves of the AC voltage tend to be insufficient for achieving adequate brightness of the lamp. Thus, it has been desired to solve such prior-art problems and achieve both favorable lamp lighting and battery charging even when the engine speed is low.

As the engine speed increases and the AC voltage from the generator becomes greater, it becomes required to control the electric current flowing through the lamp in order to prevent an excessive current from damaging it. For this purpose, in some of the conventional systems, a switching device is connected in parallel with the lamp so that the switching device is turned on to short-circuit the ends of the lamp when a voltage across the lamp greater than a prescribed value is detected. In order to prevent influencing the battery charging which is usually achieved by positive half-waves of the AC voltage from the generator, such lamp current control is typically performed only during a phase in which a negative half-wave of the AC voltage is applied to the lamp. However, in such "short-circuiting" control, a large electric current flows through the switching device as well as the electric generator when the turned on switching device is short-circuiting the ends of the lamp, and thus considerable electric power is wastefully dissipated as heat, resulting in inefficient usage of the generated electric power.

### BRIEF SUMMARY OF THE INVENTION

In view of the above, a primary object of the present invention is to provide an improved lamp lighting and battery charging control system for a vehicle which can favorably use the electric power produced from the engine-driven electric generator in both lamp lighting and battery charging.

A second object of the present invention is to provide a lamp lighting and battery charging control system for a vehicle in which both the lamp lighting and battery charging can be desirably achieved even when the engine speed is low.

A third object of the present invention is to provide a lamp lighting and battery charging control system for a vehicle in which the electric current flowing through the lamp can be properly controlled without wastefully consuming electric power from the generator as heat.

A forth object of the present invention is to provide such a lamp lighting and battery charging control system in a simple and cost-effective manner.

According to the present invention, these and other objects can be accomplished by providing a lamp lighting and battery charging system for a vehicle comprising an electric generator which is driven by an internal combustion engine to generate an AC voltage comprising alternate positive and negative half-waves, a battery operatively connected to the electric generator so that the battery is charged by the AC voltage from the generator, a lamp operatively connected to the electric generator so that the lamp is supplied with electric power from the generator, and a lamp lighting control circuit connected between the electric generator and the lamp, characterized by that: the lamp lighting control circuit operates so that one of the positive and negative half-waves of the AC voltage generated by the electric generator is supplied to the lamp at a rate of in M cycles for every N cycles of the AC voltage, N being a positive integer greater than 1 and M being a positive integer smaller than N, while the other of the positive and negative half-waves of the AC voltage is always supplied to the lamp when it is generated; and the battery is charged by the one of the positive and negative half-waves of the AC voltage from the generator.

Thus, by suitably selecting M and N, it is possible to best balance the characteristics of the conventional full-wave and half-wave techniques, to thereby achieve most effective use of the generated electric power in lamp lighting and battery charging. Particularly when N is equal to 2 and M is equal to 1, the full-wave and half-wave techniques are performed alternately in every other cycle of the AC voltage from the generator. Accordingly the lamp is lighted alternately by a full-wave and a half-wave in every other cycle, ensuring sufficient luminous intensity of the lamp even at low engine speeds, while every other positive half-waves which can be used exclusively in charging the battery can prevent insufficient battery charging at low engine speeds. Typically, the one of the positive and negative half-waves of the AC voltage is a positive half-wave.

Such desirable lamp lighting and battery charging control can be achieved by the lamp lighting control circuit comprising: a first switching device connected between the lamp and the electric generator; a first control circuit which, when activated, operates to turn on the first switching device when the one of the positive and negative half-waves of the AC voltage is generated from the electric generator; and means for activating/deactivating the first control circuit so that the first control circuit is alternately activated and deactivated in every other cycle of the AC voltage. In one embodiment of the present invention, the means for ' activating/deactivating the first control circuit preferably comprises a flipflop circuit.

The first switching device can be embodied by a triac, and in order to desirably control the triac, the lamp lighting control circuit may further comprise a second control circuit for turning on the triac when the other of the positive and negative half-waves of the AC voltage is generated from the electric generator.

The preferable battery charging control can be achieved by providing a second switching device connected between the battery and the electric generator; and means for controlling the second switching device so as to turn on the second switching device when a voltage across the battery is greater than a prescribed value. In a preferred embodiment, the means for controlling the second switching device operates so as not to turn on the second switching device when the AC voltage from the electric generator is used in lighting the lamp. In such an embodiment, though the battery charging current, somewhat reduces, it becomes possible to separate the battery charging and the lamp lighting from each other. This can eliminate sensible fluctuations in luminous intensity of the lamp caused by the battery charging which may randomly take place depending on the charging state of the battery.

The lamp lighting control circuit may operate as above only when an engine speed is lower than a prescribed value, in which such operation is particularly beneficial.

According to another aspect of the present invention, there is provided a lamp lighting and battery charging system for a vehicle comprising an electric generator which is driven by an internal combustion engine to generate an AC voltage comprising alternate positive and negative half-waves, a battery operatively connected to the electric generator so that the battery is charged by the AC voltage from the generator, a lamp operatively connected to the electric generator so that the lamp is supplied with electric power from.the generator, and a lamp lighting control circuit connected between the electric generator and the lamp, characterized by that: the lamp lighting control circuit comprises a switching device connected between the lamp and the electric generator, wherein for engine speeds lower than a first prescribed value the switching device is kept in an on state substantially throughout each cycle of the AC voltage from the electric generator and for engine speeds higher than the first prescribed value a timing of turning on of the switching device in each cycle of the AC voltage is gradually delayed as the engine speed increases.

Thus, for engine speeds higher than the first prescribed value, the duration of the electric current flowing through the lamp is gradually decreased as the engine speed increases and hence the AC voltage from the electric generator becomes larger. This preferably prevents an excessive electric current from damaging the lamp, without wastefully consuming electric power from the generator as heat.

Such desirable lamp lighting control can by achieved by the lamp lighting control circuit further comprising: a first control circuit for controlling the turning on of the switching device during a first phase in which a former half-wave of each cycle of the AC voltage is generated from the electric generator; a second control circuit for controlling the turning on of the switching device during a second phase in which a latter half-wave of each cycle of the AC voltage is generated from the electric generator; and an engine speed detection circuit for providing the first and second control circuits with a signal indicating the engine speed. In a preferred embodiment, the signal indicating the engine speed is a voltage across a capacitor which varies with an amplitude of the AC voltage generated from the electric generator. The switching device can practically be embodied by a triac.

Further, it will be beneficial if the charging of the battery is achieved by the former half-wave of each cycle of the AC voltage from the electric generator, and the lamp lighting control circuit further comprises: means for deactivating the first control circuit when the engine speed is higher than a second prescribed value that is higher than the first prescribed value, so that when the engine speed is higher than the second prescribed value the switching device is kept in the off state during the first phase. Typically, the former half-wave of each cycle of the AC voltage is the positive half-wave of the AC voltage. The means for deactivating the first control circuit may preferably comprise a flipflop circuit. In this way, for the engine speeds higher than the second prescribed value, the former half-wave of each cycle of the AC voltage can be used exclusively in charging the battery while the latter half-wave of each cycle of the AC voltage can be used exclusively in lighting the lamp, thereby achieving favorable separation of the lamp lighting and the battery charging. Further, since it is not a large short-circuit current but much smaller lamp lighting current that is flowing at the end of the second phase, a delay in the battery charging current in the first phase can be minimized. This leads to more efficient use of the electric power produced by the electric generator.

### BRIEF DESCRIPTION OF THE DRAWINGS

Now the present invention is described in the following with reference to the appended drawings, in which:
Figure 1 is a block diagram showing a lamp lighting and battery charging control system for a vehicle according to one embodiment of the present invention;
Figure 2 is a waveform diagram for explaining the operation of the lamp lighting and battery charging control system of Figure 1;
Figure 3 is a block diagram showing a lamp lighting and battery charging control circuit according to another embodiment of the present invention;
Figure 4 is an exemplary circuit diagram of the positive wave control circuit 4, negative wave control circuit 5 and lamp voltage detection circuit 6 of Figure 3;
Figure 5 is a waveform diagram for explaining the operation of the lamp lighting and battery charging control system of Figure 3;
Figure 6 is a waveform diagram for showing one conventional technique to use the electric generator voltage in both lamp lighting and battery charging; and
Figure 7 is a waveform diagram for showing another conventional technique to use the electric generator voltage in both lamp lighting and battery charging.

### DETAILED DESCRIPTION OF THE PREFERRED EMBODIMENTS

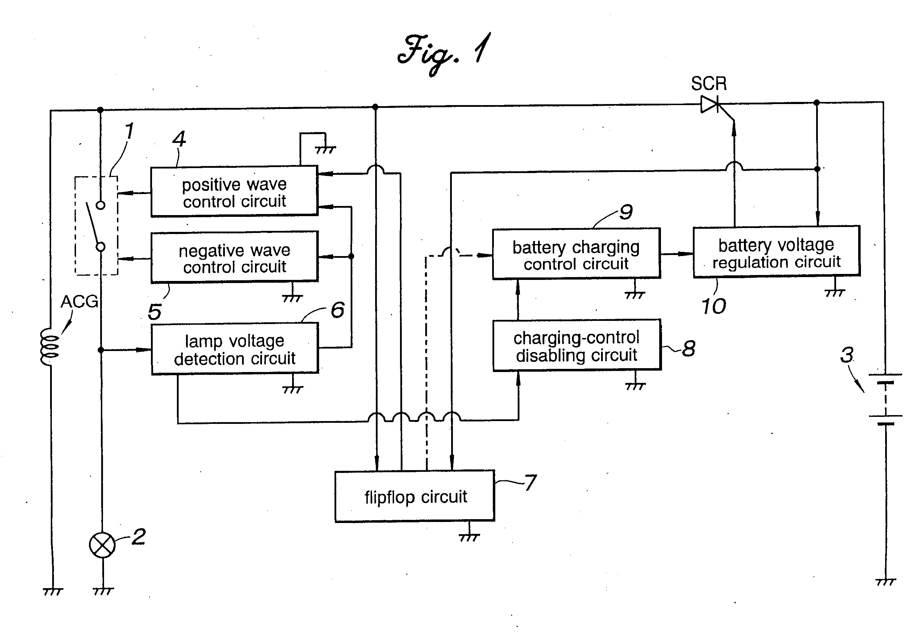

Figure 1 is a block diagram showing a lamp lighting and battery charging control system for a vehicle according to the present invention. As shown in the drawing, an AC voltage generated from an electric generator ACG which is driven by and rotates with an internal combustion engine (not shown) is supplied to a lamp 2 (e.g., a head lamp) through a switching device 1 as well as to a battery 3 through a thyristor SCR.

The switching device 1, which preferably consists of a triac or bidirectional triode thyristor, is controlled (or triggered) by a positive wave control circuit (or a first control circuit) 4 and a negative wave control circuit (or a second control circuit) 5, and when turned on, transmits positive or negative voltages from the generator ACG to the lamp 2. A voltage at a node between the switching device 1 and the lamp 2 is provided to a lamp voltage detection circuit 6 of which output signal is' forwarded to both the positive and negative wave control circuits 4, 5.

Thus, the positive and negative wave control circuits 4, 5 operates according to the output signal from the lamp voltage detection circuit 6. The positive wave control circuit 4 is also controlled by a non-inverted output signal from a flipflop circuit 7 which serves as means for activatirig/deactivating the positive wave control circuit 4. Thus, in this embodiment the triac 1 and the circuits 4, 5, 6 and 7 constitute a lamp lighting control circuit. The flipflop circuit 7 is supplied with the output voltage from the generator ACG and a charging voltage of the battery 3.

Further, the output signal from the lamp voltage detection circuit 6 is provided to a charging-control disabling circuit 8 of which output signal is forwarded to a battery charging control circuit 9, which in turn provides its output to a battery voltage regulating circuit 10. This battery voltage regulating circuit 10 monitors the voltage across the battery 3 and, when detecting a battery voltage below a prescribed value VB, provides the thyristor SCR with a gate signal to turn on the same.

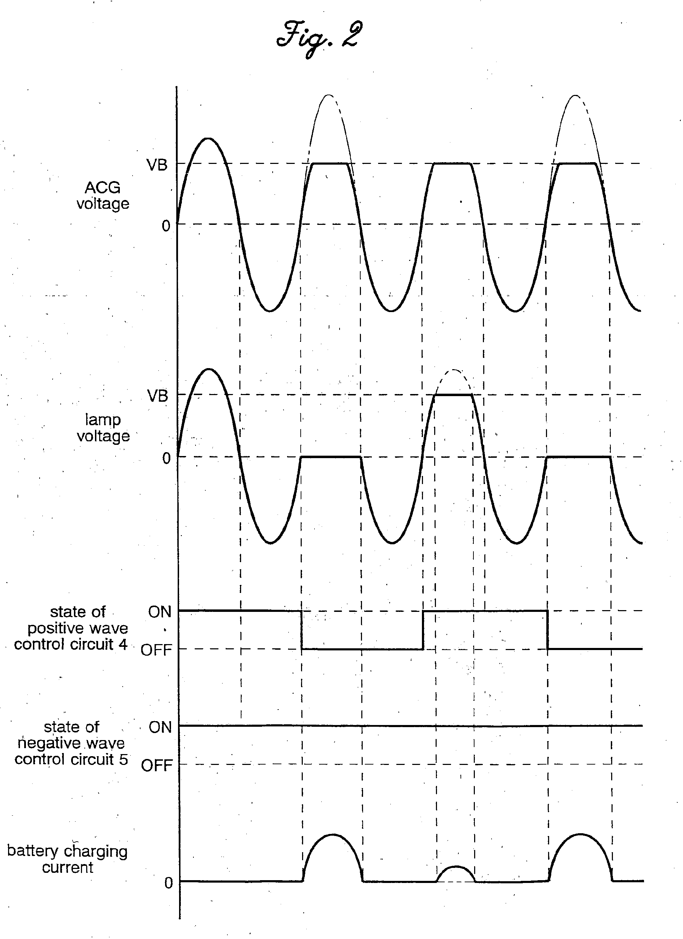

Now, referring to waveforms shown in Figure 2 an operation of the above-constructed lamp lighting and battery charging control system is described hereinafter. As shown in Figure 2, the electric generator ACG produces an AC waveform voltage and, in every other cycle of which the positive wave control circuit 4 is activated (ON) and deactivated (OFF) alternately. It should be noted that the negative wave control circuit 5 is activated all the time.

When the positive wave control circuit 4 is activated, it triggers the switching device 1, which consists of a triac as mentioned above, so that the switching device 1 conducts the positive voltage generated from the generator ACG. Similarly, the always-activated negative wave control circuit 5 functions to allow the negative voltage from the generator ACG to pass through the switching device 1 every time it is generated. Thus, as shown in Figure 2, in the cycle during which the positive wave control circuit 4 is activated, both the positive and negative voltages (i.e., a full-wave voltage) are supplied to the lamp 2, while in the cycle during which the circuit 4 is deactivated, only the negative voltage (i.e., a half-wave voltage) is supplied to the lamp 2. In other words, in this embodiment the full-wave and half-wave control techniques are performed alternately in every other cycle of the AC voltage from the generator ACG.

When it is detected that the voltage across the battery 3 falls below the prescribed value VB, the battery voltage regulating circuit 10 turns on the thyristor SCR. As a result, positive half-waves of the AC voltage from the generator are truncated when the charging of the battery takes place, as shown in the uppermost waveform in Figure 2. As shown in the lowermost waveform, the electric current flowing toward the battery 3 varies depending on whether the generator voltage is used both in lamp lighting and battery charging or only in battery charging. As seen, when no electric current is flowing through the lamp 2, a greater electric current for charging the battery 3 is available. It should be noted that if the' battery charging does not take place in the cycle where the positive wave control circuit 4 is deactivated, the generator ACG is rotated with no electrical load and thus the output voltage thereof will be somewhat increased, as shown by phantom lines in the uppermost waveform.

In this way, since the full-wave and half-wave techniques are performed alternately in every other cycle, and hence the lamp is lighted by every other positive half-waves in addition to every negative half-wave of the AC voltage from the generator ACG, it is ensured that sufficient luminous intensity of the lamp 2 is achieved even at low engine speeds. Further, every other positive half-waves which are not used in lighting the lamp 2 and thus can be used exclusively in charging the battery 3 can prevent insufficient battery charging. It should be noted that though in the above preferred embodiment the full-wave control was performed once in every two cycles of the AC voltage from the generator, it may be possible to perform the full-wave control at a rate other than that. Generally, according to the present invention the full-wave control may take place at a rate of in M cycles for every N cycles of the AC voltage from the generator, wherein N is a positive integer greater than 1 and M is a positive integer smaller than N. It should also be noted that M is equal to N in the conventional full-wave technique shown in Figure 6 while M is equal to zero (0) in the conventional half-wave technique shown in Figure 7.

In the above embodiment, the battery charging may take place regardless of whether or not the positive voltage from the generator ACG is being used in lighting the lamp 2. In a second embodiment of the present invention, an inverted output signal of the flipflop 7 is provided to the charging control circuit 9, as shown by a phantom line in Figure 1, so that this signal can be used by the charging control circuit 9 in controlling the battery voltage regulating circuit 10. By using the inverted output from the flipflop 7, the charging control circuit 9 works to prohibit the battery charging when the positive voltage from the generator ACG is used in lighting the lamp 2. The resulting waveforms of the lamp voltage and the battery charging current are shown by phantom lines in Figure 2.

Thus, in this embodiment the full-wave and half-wave techniques are performed alternately in every other cycle as in the first embodiment, but when the full-wave technique is being performed, the full-wave voltage is used exclusively in lighting the lamp. As a result, though the battery charging current somewhat reduces, it becomes possible to separate the battery charging and the lamp lighting from each other. In other words, it is prevented that the battery charging influences the lamp lighting. This can eliminate sensible fluctuations in luminous intensity of the lamp 2 caused by the battery charging which may randomly take place depending on the charging state of the battery 3. It should be noted that the battery's state of charge can change irregularly due to operations of DC load(s) such as a stop lamp and the like which are connected to the battery.

In the above embodiments, the circuit for activating/deactivating the positive wave control circuit 4 was implemented by the flipflop 7. However it should not be limited to the flipflop 7 so long as the activation/deactivation of the positive wave control circuit 4 is carried out in every other cycle of the AC voltage from the generator ACG. For example, it may be possible to use a CPU instead of the flipflop. Further, the above described control of the switching device 1 may be effected only in a low engine speed range below a prescribed engine speed.

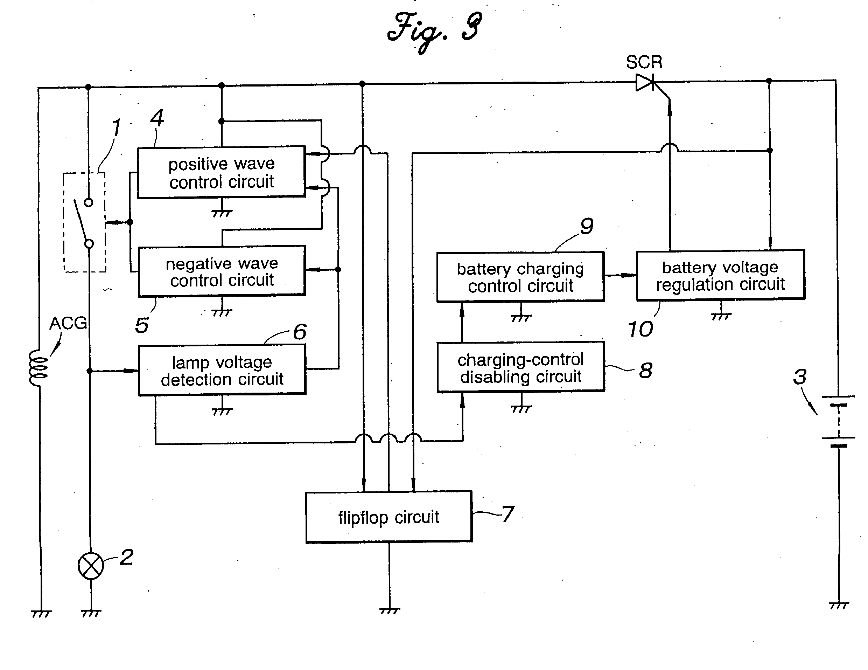

Next, a third embodiment of a lamp lighting and battery charging control system for a vehicle according to another aspect of the present invention will be described with reference to Figures 3-5. It should be noted that the components similar to those of the first embodiment shown in Figure 1 are designated by the same reference numerals.

In the embodiment shown in Figure 3, the output voltage from the generator ACG is supplied to both the positive and negative wave control circuits 4, 5.

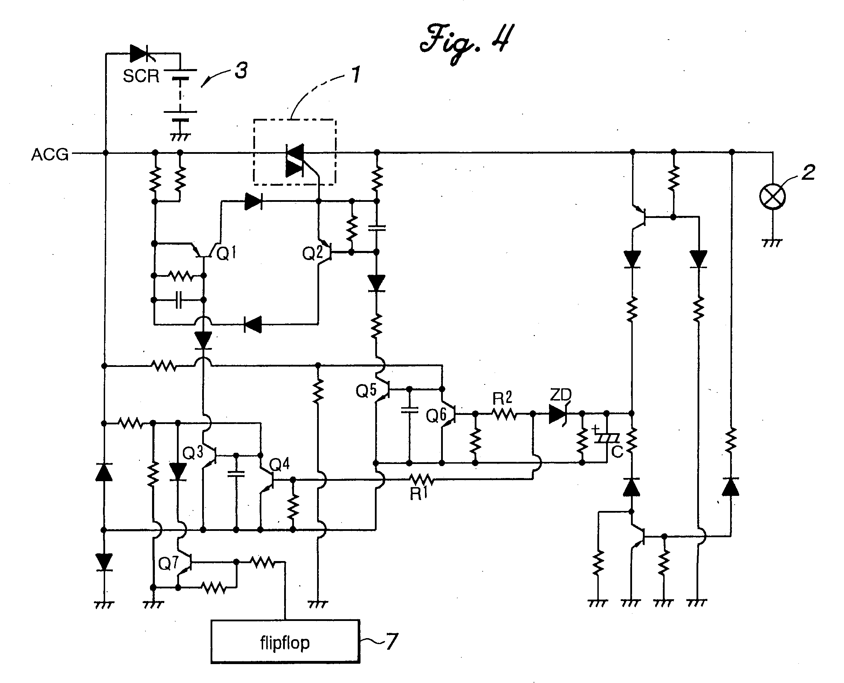

The positive and negative wave control circuits 4, 5 and lamp voltage detection circuit 6 in Figure 3 can be constructed as shown in detail in Figure 4, for example. In the shown circuit, the first and third quadrants of the triac 1 is used. In other words, the triac 1 is turned on either (1) when the voltage (or electric potential) at the generator-side end of the triac 1 is higher than that at the other end thereof and a positive gate signal is supplied to the triac 1; or (2) when the voltage at the generator-side end of the triac 1 is lower than that at the other end thereof and a negative gate signal is supplied to the triac 1. The circuit in Figure 4 comprises transistors Q1-Q7 which are turned on/off so as to favorably control the triac 1, as describe in detail later.

A capacitor C is charged by both positive and negative voltages generated by the electric generator ACG so that the voltage across the capacitor C is varied with the amplitude of the voltage generated by the generator ACG. Resistors R1 and R2 connected on the base circuit of corresponding transistors Q4 and Q6, respectively, function in conjunction with a zener diode ZD to control the state of the transistors Q4 and Q6 depending on the voltage across the capacitor C. Specifically, the transistor Q4 is turned on when a voltage across the capacitor C corresponding to a generator voltage in the middle engine speed range is supplied to its base via the resistor R1, while the transistor Q6 is turned on when a voltage across the capacitor C corresponding to a generator voltage in the high engine speed range is supplied to its base via the resistor R2.

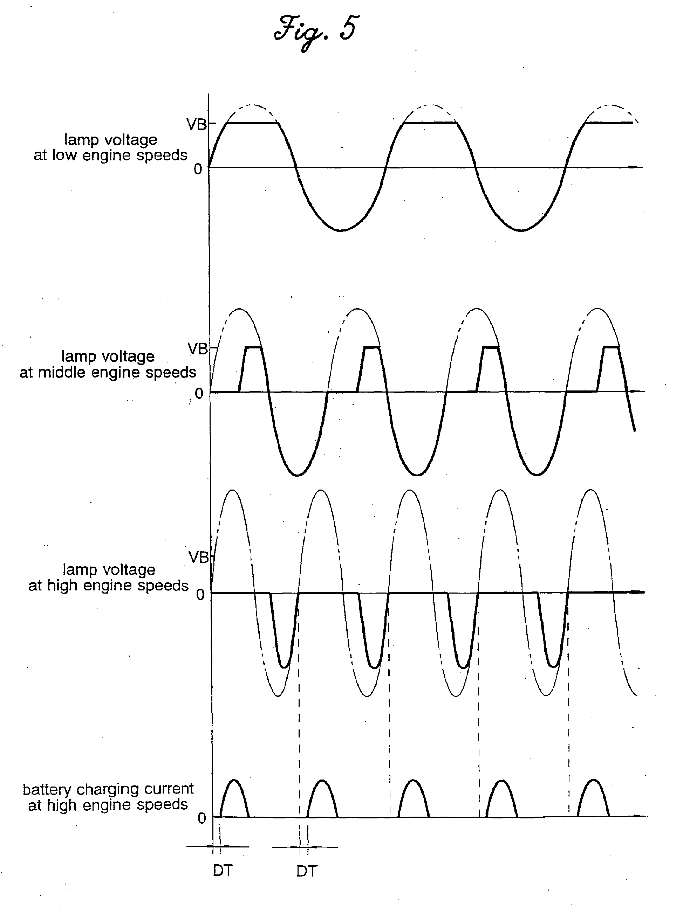

When the engine speed is low, the voltage across the capacitor C is also low, and thus both the transistors Q4 and Q6 are kept in the OFF state throughout the cycle. Therefore, when a positive voltage is generated from the generator ACG, the transistor 3 is turned on. This causes the transistor Q1 to be turned on, providing a positive gate signal to the triac 1 so as to turn it on and supply the positive voltage to the lamp 2. Similarly, when a negative voltage is generated from the generator ACG, then the transistor Q5 is turned on, causing the transistor Q2 to be turned on. This also turns on the triac 1. In this way, at low engine speeds both the positive and negative voltages from the generator ACG are supplied to the lamp 2 via the triac 1 as shown by the uppermost solid-line waveform in Figure 5.

As the engine speed increases together with the voltage across the capacitor C, it occurs at middle engine speeds that the voltage across the capacitor C is greater than a breakdown voltage of the zener diode ZD at the moment when a positive voltage from the generator ACG begins to be applied to the triac 1. This causes the transistor Q4 to be in the ON state, preventing the transistor Q3 and hence the transistor Q1 from being turned on. It should be noted that at middle engine speeds, the transistor Q6 is kept in the OFF state. This is achieved by properly selecting the resistor R2 connected in the base circuit of the transistor Q6.

Once the capacitor C is discharged with a CR time-constant to an extent that its voltage becomes lower than the zener diode ZD's breakdown voltage, turning off the transistor Q4, then the transistor Q3 and thus the transistor Q1 are turned on so that the switching device 1 is turned on to supply the positive voltage to the lamp 2, as shown in the upper middle solid-line waveform in Figure 5. It should be noted that the timing of the turning on of the transistors Q3 and Q1 (and hence the switching device 1) is gradually delayed (or shifted toward the right in Figure 5) as the engine speed and hence the voltage across the capacitor C increase. In other words, the "ON period" of the positive voltage is gradually decreased as the engine speed increases in the middle engine speed range.

In the middle engine speed range also, as mentioned above, the transistor Q6 is in the OFF state at the moment when a negative voltage begins to be generated from the generator ACG, allowing the transistor Q5 to be turned on. Therefore, when the negative voltage is generated, the transistor 5 and hence the transistor Q2 are turned on, causing the switching device 1 to be turned on in the same manner as when the engine speed is low.

Thus, at middle engine speeds, part of the positive voltages and entire negative voltages from the generator ACG are used in lighting the lamp 2 so that an excessive current is prevented from flowing the lamp 2. It should be noted that at low and middle engine speeds the transistor Q7 is kept in the OFF state so as not to prevent the turning on of the transistor Q3, in other words the positive wave control circuit 4 in Figure 3 is activated throughout the cycle.

As the engine speed increases further, at a certain prescribed engine speed the flipflop 7 begins to operate to deactivate the positive wave control circuit 4 while a positive voltage is generated from the generator ACG. In other words, the output from the flipflop 7 keeps the transistor Q7 in the ON state during the generation of a positive half-wave voltage so as to prevent the turning on of the transistor Q3. Thus, at high engine speeds over the prescribed engine speed the switching device 1 keeps the circuit open during the phase in which a positive voltage is generated from the generator ACG.

At such high engine speeds, when a negative voltage begins to be generated from the generator ACG (naturally with the transistor Q7 turned off), the voltage across the capacitor C is greater than the breakdown voltage ZD, and the transistor Q6 is in the ON state, preventing the turning on of the transistor Q5 and hence of the transistor Q2.

Once the capacitor C is discharged with a CR time-constant to an extent that its voltage becomes lower than the zener diode ZD's breakdown voltage, causing the transistor Q6 to be turned off, then the transistor Q5 and thus the transistor Q2 are turned on so that the switching device 1 is turned on to supply the negative voltage to the lamp 2. The negative voltage continues to be supplied to the lamp 2 until the subsequent positive voltage is generated from the generator ACG and the switching device 1 is turned off: The resulting lamp voltage at high engine speeds is shown by the lower middle solid-line waveform in Figure 5.

At high engine speeds also, the timing of turning on of the switching device 1 during the generation of a negative voltage from the generator ACG is delayed as the engine speed increases in a similar fashion to that described before with respect to the positive voltage "ON period" control at middle engine speeds. Thus, the time duration of the electric current flowing through the lamp 2 is gradually decreased as the engine speed increases, preventing an excessive'electric current from damaging the lamp 2 in the high engine speed range.

As shown in the lowermost waveform in Figure 5, the battery charging current will flow corresponding to the positive voltages generated from the electric generator ACG, with some delay DT which may be caused by an inductance of the generator ACG. This delay DT in the rise of the battery charging current can be influenced by an amount of current flowing through the lamp 2. If the ends of the lamp 2 were shortcircuited during a latter part of a negative half-wave voltage from the generator ACG according to the conventional "short-circuiting" control of the lamp voltage, with a resulting greater short-circuit current flowing through the generator ACG, the delay DT would be larger.

However, in the above embodiment of the present invention, since it is not the large short-circuit current but the much smaller lamp lighting current that is flowing at the end of the negative voltage phase, the delay DT in the battery charging current can be minimized. This allows more efficient use of the electric power produced by the generator ACG.

As described above, according to one embodiment of the present invention, since the full-wave and half-wave techniques are performed alternately in every other cycle, and hence the lamp is alternately lighted by a full-wave and a half-wave of the AC voltage from the electric generator in every other cycle, it is ensured that sufficient luminous intensity of the lamp is achieved even at low engine speeds. Further, every other positive half-waves which can be used exclusively in charging the battery can prevent insufficient battery charging.

According to another embodiment of the present invention, the turning on of the switching device for controlling the electric current which flows through the lamp is gradually delayed and thus the time duration of the lamp lighting current is gradually decreased as the engine speed increases, preventing an excessive electric current from damaging the lamp even in the high engine speed range in which an excessive electric power could be produced from the generator. When compared with the conventional technique in which a short-circuiting circuit was used to divert an electric current from the lamp, wasted electric current is considerably reduced and accordingly the heat generation from the generator and the switching device can be suppressed, improving the efficiency in using the generated electric power.

Although the present invention has been described in terms of preferred embodiments thereof, it will be obvious to a person skilled in the art that various alterations and modifications are possible without departing from the scope of the present invention which is set forth in the appended claims. For example, it may be possible to use other switching devices such as transistors or thyristors or combination thereof in place of the triac. Particularly, in the first embodiment of the present invention, the triac 1 can be replaced by a combination of a diode for conducting the negative voltage from the electric generator and a thyristor connected in parallel with the diode for controllably conducting the positive voltage produced from the electric generator. Further, the directions of the thyristor SCR and the battery 3 shown in Figures 1 and 3 can be reversed so that the negative voltage from the electric generator is used in charging the battery 3 and the positive voltage is used in lighting the lamp 2. Such modifications should fall within the scope of the present invention defined by the claims.

## Claims

1. A lamp lighting and battery charging system for a vehicle comprising an electric generator (ACG) which is driven by an internal combustion engine to generate an AC voltage comprising alternate positive and negative half-waves, a battery (3) operatively connected to the electric generator (ACG) so that the battery (3) is charged by the AC voltage from the generator (ACG), a lamp (2) operatively connected to the electric generator (ACG) so that the lamp (2) is supplied with electric power from the generator (ACG), and a lamp lighting control circuit (1, 4, 5, 6, 7) connected between the electric generator (ACG) and the lamp (2), **characterized by** that:
the lamp lighting control circuit (1, 4, 5, 6, 7) comprises a switching device (1) connected between the lamp (2) and the electric generator (ACG), wherein for engine speeds lower than a first prescribed value the switching device (1) is kept in an on state substantially throughout each cycle of the AC voltage from the electric generator (ACG) and for engine speeds higher than the first prescribed value a timing of turning on of the switching device (1) in each cycle of the AC voltage is gradually delayed as the engine speed increases.

2. A lamp lighting and battery charging control system for a vehicle according to claim 1, wherein the lamp lighting control circuit (1, 4, 5, 6,. 7) further comprises:
a first control circuit (4) for controlling the turning on of the switching device (1) during a first phase in which a former half-wave of each cycle of the AC voltage is generated from the electric generator (ACG);
a second control circuit (5) for controlling the turning on of the switching device (1) during a second phase in which a latter half-wave of each cycle of the AC voltage is generated from the electric generator (ACG); and
an engine speed detection circuit (6) for providing the first and second control circuits (4, 5) with a signal indicating the engine speed.

3. A lamp lighting and battery charging control system for a vehicle according to claim 2, wherein the signal indicating the engine speed is a voltage across a capacitor (C) which varies with an amplitude of the AC voltage generated from the electric generator (ACG).

4. A lamp lighting and battery charging control system for a vehicle according to claim' 2, wherein the switching device (1) consists of a triac - (1).

5. A lamp lighting and battery charging control system for a vehicle according to claim 2, wherein the charging of the battery (3) is achieved by the former half-wave of each cycle of the AC voltage from the electric generator (ACG), and the lamp lighting control circuit (1, 4, 5, 6, 7) further comprises:
means (7) for deactivating the first control circuit (4) when the engine speed is higher than a second prescribed value that is higher than the first prescribed value, so that when the engine speed is higher than the second prescribed value the switching device (1) is kept in the off state during the first phase.

6. A lamp lighting and battery charging control system for a vehicle according to claim 5, wherein the former half-wave of each cycle of the AC voltage is the positive half-wave of the AC voltage.

7. A lamp lighting and battery charging control system for a vehicle according to claim 5, wherein the means (7) for deactivating the first control circuit (4) comprises a flipflop circuit (7).
